# EUROPEAN PATENT APPLICATION

(11) **EP 4 819 310 A1**
(43) Date of publication of application: **07.10.2026**
(21) Application number: 25900472.9
(22) Date of filing: 24.11.2025
(51) Int. Cl.: H01M 50/102, H01M 10/052

(54) **BATTERY CELL AND BATTERY PACK**

(30) Priority: 03.12.2024 CN 202422980614 U
(71) Applicant: Sunwoda Mobility Energy Technology Co., Ltd., Shenzhen, Guangdong 518107 (CN)
(72) Inventor: LIN, Xiude, Shenzhen, Guangdong 518107 (CN); YANG, Wei, Shenzhen, Guangdong 518107 (CN); ZHAO, Kaiyuan, Shenzhen, Guangdong 518107 (CN); ZHOU, Jie, Shenzhen, Guangdong 518107 (CN); SHEN, Kun, Shenzhen, Guangdong 518107 (CN); QIN, Jisheng, Shenzhen, Guangdong 518107 (CN)
(74) Representative: Patentwerk B.V.
(86) International application number: PCT/CN2025/137132
(87) International publication number: WO 2026/118929

(57) **Abstract**

A battery cell includes a top cover, a housing provided with an accommodating cavity, and an electrode assembly arranged in the accommodating cavity. The housing includes two first side plates opposite to each other, each including an opening portion, a first thickened portion, and a first body portion. The first thickened portion protrudes toward an interior of the accommodating cavity. A thickness of the first thickened portion is greater than a thickness of the opening portion and a thickness of the first body portion. The first thickened portion includes a first transition segment, a thickened segment, and a second transition segment in sequence. An inner peripheral surface of the first transition segment extends from the opening portion to the thickened segment to form a first stepped surface. The first stepped surface is configured to limit the top cover.

## Description

### CROSS-REFERENCE TO RELATED APPLICATION

This application claims priority to Chinese patent application No. 202422980614.2, filed December 03, 2024, entitled "BATTERY CELL AND BATTERY PACK", the contents of which are incorporated herein by reference in their entirety.

### TECHNICAL FIELD

The present disclosure relates to the technical field of batteries, and specifically to a battery cell and a battery pack.

### BACKGROUND

With the increasing maturity of lithium-ion battery technologies, lithium-ion batteries are widely used as power batteries in the fields of electric vehicles and energy storage. A lithium-ion power battery typically includes an internal structure and an external structure. The internal structure mainly includes an electrode assembly. The external structure mainly includes a cover plate and a housing. The housing provides space for accommodating the electrode assembly. The cover plate and the housing are welded together to fix the electrode assembly within the internal space.

In the related art, the housing is typically designed to be as thin as possible in order to provide more internal space for the electrode assembly. However, if the electrode assembly is heavy or large, the structural strength of the housing is likely to be insufficient.

### SUMMARY

An objective of the present disclosure is to provide a battery cell and a battery pack to address the problem in the related art that the housing is typically designed to be as thin as possible in order to provide a larger internal space for the electrode assembly, but if the electrode assembly is heavy or large, the structural strength of the housing is likely to be insufficient.

To solve the above technical problems, the present disclosure is implemented as follows.

In accordance with a first aspect of the present disclosure, an embodiment provides a battery cell, including: a top cover, a housing, and an electrode assembly, where the housing is provided with an accommodating cavity, the electrode assembly is arranged in the accommodating cavity, the accommodating cavity includes an opening and a cavity bottom opposite to the opening, and the top cover is configured to cover and seal the opening;
the battery cell has a first direction, the housing includes two first side plates opposite to each other, extending directions of the first side plates are parallel to the first direction, at least one of the first side plates includes an opening portion, a first thickened portion, and a first body portion arranged in sequence in the first direction, the first thickened portion protrudes toward an interior of the accommodating cavity, and a thickness of the first thickened portion is greater than a thickness of the opening portion and is greater than a thickness of the first body portion;
the first thickened portion includes a first transition segment, a thickened segment, and a second transition segment distributed in sequence in the first direction; and an inner peripheral surface of the first transition segment extends from the opening portion to the thickened segment to form a first stepped surface, an inner peripheral surface of the second transition segment extends obliquely from the first body portion to the thickened segment to form a second stepped surface, and the first stepped surface is configured to limit the top cover.

Optionally, a first angle α is defined between the first stepped surface and a side surface of the opening portion facing the accommodating cavity, a second angle β is defined between the second stepped surface and a side surface of the first body portion facing the accommodating cavity, the thickness of the opening portion is defined as d1, a maximum thickness of the first thickened portion is defined as d2, and the thickness of the first body portion is defined as d3, where 1 mm≤(d2-d1)/tanα+(d2-d3)/tanβ≤24 mm or $3 mm \leq \left(d2-d1\right) / tanα + \left(d2-d3\right) / tanβ \leq 6 mm .$

Optionally, a first angle α is defined between the first stepped surface and a side surface of the opening portion facing the accommodating cavity, where 10°≤α≤40°; and/or
a second angle β is defined between the second stepped surface and a side surface of the first body portion facing the accommodating cavity, where 0.5°<β≤10°.

Optionally, the thickness of the opening portion is defined as d1, a maximum thickness of the first thickened portion is defined as d2, the thickness of the first body portion is defined as d3, and one or more of the following conditions are satisfied: $0.1 mm \leq d 2 - d 1 \leq 0.2 mm ;$ (a) $0.15 mm \leq d 2 - d 1 \leq 0.2 mm ;$ (b) $0.1 mm \leq d 2 - d 3 \leq 0.2 mm ; and$ (c) $0.15 mm \leq d 2 - d 3 \leq 0.2 mm .$ (d)

Optionally, a maximum thickness d2 of the first thickened portion satisfies: 0.6 mm<d2<1.0 mm; and/or
the thickness d1 of the opening portion satisfies: 0.4 mm<d1≤0.8 mm; and/or
the thickness d3 of the first body portion satisfies: 0.5 mm<d3≤0.8 mm.

Optionally, the thickness d1 of the opening portion and the thickness d3 of the first body portion satisfy: d1≤d3.

Optionally, in a direction from the opening portion to the first body portion, the thickened segment has a uniform thickness, a thickness of the first transition segment gradually increases, and a thickness of the second transition segment gradually decreases.

Optionally, the battery cell further includes an insulating layer, where the insulating layer is arranged on a side of the top cover facing the cavity bottom, a total height of the top cover and the insulating layer is defined as h5, a height of the opening portion is defined as h1, a height of the first thickened portion is defined as h2, and a height of the top cover is defined as h6, where h6<h1+h2≤h5+15 mm.

Optionally, a height of the opening portion is defined as h1 and a height of the top cover is defined as h6, where 0 mm≤h6-h1≤0.6 mm.

Optionally, the height h1 of the opening portion satisfies: 0.9 mm≤h1≤2.1 mm; and/or
the height h6 of the top cover satisfies: 1.5 mm≤h6≤2.5 mm.

Optionally, a height h2 of the first thickened portion satisfies: 1.2 mm≤h2≤25 mm; or
a height h2 of the first thickened portion satisfies: 3.6 mm≤h2≤6.9 mm.

Optionally, the housing further includes two second side plates opposite to each other, the two first side plates and the two second side plates are connected end-to-end in sequence, and an area of an outer surface of each of the first side plates is smaller than an area of an outer surface of each of the second side plates; at least one of the second side plates includes a second thickened portion, a transition portion, and a second body portion distributed in the first direction; and a thickness of the second thickened portion is greater than a thickness of the second body portion, and an inner peripheral surface of the transition portion extends from the second body portion to the second thickened portion to form a third stepped surface.

Optionally, a third angle γ is defined between the third stepped surface and a side surface of the second body portion facing the accommodating cavity, where 0°<γ≤30°; and/or
a maximum thickness d4 of the second thickened portion satisfies: 0.4 mm≤d4≤0.9 mm; and/or
a thickness d5 of the second body portion satisfies: 0.3 mm≤d5≤0.7 mm; and/or
a total height h3 of the second thickened portion and the transition portion satisfies: 1.4 mm≤h3≤18 mm; and/or
a height h4 of the transition portion satisfies: 2 mm≤h4≤15 mm.

Optionally, a third angle γ is defined between the third stepped surface and a side surface of the second body portion facing the accommodating cavity, where 0°<γ≤10°; and/or
a maximum thickness d4 of the second thickened portion satisfies: 0.5 mm≤d4≤0.8 mm; and/or
a thickness d5 of the second body portion satisfies: 0.4 mm≤d5≤0.7 mm; and/or
a total height h3 of the second thickened portion and the transition portion satisfies: 1.4 mm≤h3≤3 mm; and/or
a height h4 of the transition portion satisfies: 3 mm≤h4≤6 mm.

In accordance with a second aspect of the present disclosure, an embodiment provides a battery pack, including the battery cell of any one of the above embodiments.

In the embodiments of the present disclosure, the battery cell includes a housing provided with an accommodating cavity, an electrode assembly arranged in the accommodating cavity, and a top cover configured to cover and seal an opening of the accommodating cavity. The housing includes two first side plates opposite to each other. At least one of the first side plates includes an opening portion, a first thickened portion, and a first body portion arranged in sequence in a direction from the opening to a cavity bottom of the accommodating cavity. The first thickened portion protrudes toward an interior of the accommodating cavity. A thickness of the first thickened portion is greater than a thickness of the opening portion and is greater than a thickness of the first body portion. Thus, the housing is partially thickened to enhance the structural strength of the housing while ensuring the energy density of the battery cell. The first thickened portion includes a first transition segment, a thickened segment, and a second transition segment arranged in sequence in the direction from the opening to the cavity bottom. An inner peripheral surface of the first transition segment extends from the opening portion to the thickened segment to form a first stepped surface. The top cover is located on a side of the first stepped surface away from the electrode assembly. The first stepped surface is configured to limit the top cover, to improve the stability of connection of the housing and the top cover. An inner peripheral surface of the second transition segment extends obliquely from the first body portion to the thickened segment to form a second stepped surface, which can reduce the occupation of space in the housing, improve the energy density of the battery cell, and facilitate processing.

Additional aspects and advantages of the present disclosure will be partly given in and partly apparent from the description below, or understood through practice of the present disclosure.

### BRIEF DESCRIPTION OF DRAWINGS

The above and/or other additional aspects and advantages of the present disclosure will become apparent and comprehensible from the description of embodiments made in connection with the accompanying drawings, in which:
FIG. 1 is a schematic structural diagram of a battery cell according to an embodiment of the present disclosure;
FIG. 2 is a schematic diagram of a housing according to an embodiment of the present disclosure;
FIG. 3 is a partial cross-sectional view taken along line A-A in FIG. 1 according to an embodiment of the present disclosure;
FIG. 4 is an enlarged view of part C in FIG. 3 according to an embodiment of the present disclosure;
FIG. 5 is a partial cross-sectional view taken along line B-B in FIG. 1 according to an embodiment of the present disclosure;
FIG. 6 is a partial cross-sectional view of part D in FIG. 5 according to an embodiment of the present disclosure; and
FIG. 7 is a partial schematic assembled of a top cover according to an embodiment of the present disclosure.

### List of reference numerals:

1: top cover; 11: terminal; 2: housing; 20: accommodating cavity; 201: opening; 202: cavity bottom; 21: first side plate; 211: opening portion; 212: first thickened portion; 2121: first transition segment; 2122: thickened segment; 2123: second transition segment; 213: first body portion; 214: first stepped surface; 215: second stepped surface; 22: second side plate; 221: second thickened portion; 222: transition portion; 223: second body portion; 224: third stepped surface; 23: bottom plate; 3: electrode assembly; 31: tab; 4: insulating layer; X: first direction; α: first angle; β: second angle; γ: third angle; d1: thickness of the opening portion; d2: maximum thickness of first thickened portion; d3: thickness of the first body portion; d4: thickness of the second thickened portion; d5: thickness of the second body portion; h1: height of the opening portion; h2: height of the first thickened portion; h3: total height of the second thickened portion and the transition portion; h4: height of the transition portion; h5: total height of the top cover and the insulating layer; h6: height of the top cover.

### DETAILED DESCRIPTION

Embodiments of the present disclosure will be described below in detail. Examples of the embodiments are shown in the accompanying drawings, in which identical or similar reference numerals denote identical or similar elements or elements having identical or similar functions throughout the description. The embodiments described below with reference to the drawings are exemplary only, which are used to illustrate the present disclosure and are not intended to be construed as limiting the present disclosure. All other embodiments obtained by those having ordinary skills in the art based on the embodiments of the present disclosure without creative efforts fall within the scope of protection of the present disclosure.

In the specification and claims of the present disclosure, a feature defined with terms such as "first" and "second" may explicitly or implicitly includes one or more of the features. In the description of the present disclosure, "a plurality of/multiple" means two or more than two, unless specified otherwise. Furthermore, in the specification and claims, "and/or" indicates at least one of the associated objects, and the character "/" generally indicates an "or" relationship between the related objects.

In the description of the present disclosure, it should be understood that, terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "peripheral" should be construed to refer to the orientation as then described or as shown in the drawings under discussion. These relative terms are for convenience of description and do not require that the present disclosure be constructed or operated in a particular orientation, therefore cannot be construed to limit the present disclosure.

In the description of the present disclosure, unless specified or limited otherwise, the terms "mounted," "connected," "coupled," and the like are used broadly, and may be, for example, fixed connections, detachable connections, or integral connections; may also be mechanical connections, or electric connections; may also be direct connections, or indirect connections via intervening structures; may also be inner communications of two elements. The specific meaning of the above terms within the present disclosure may be understood by those having ordinary skills in the art according to particular circumstances.

A battery cell and a battery pack provided in the present disclosure will be described in detail below with reference to the accompanying drawings through specific embodiments and application scenarios.

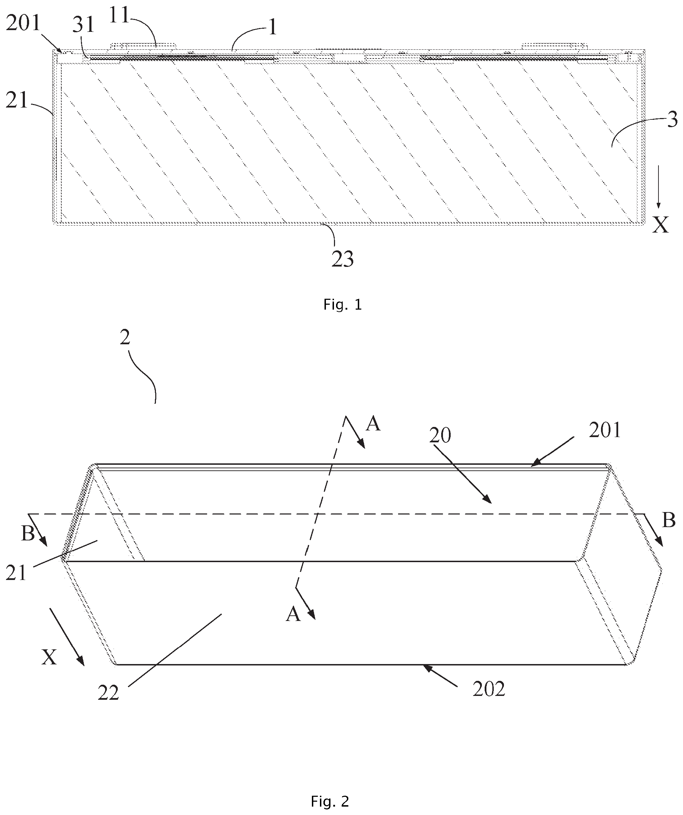

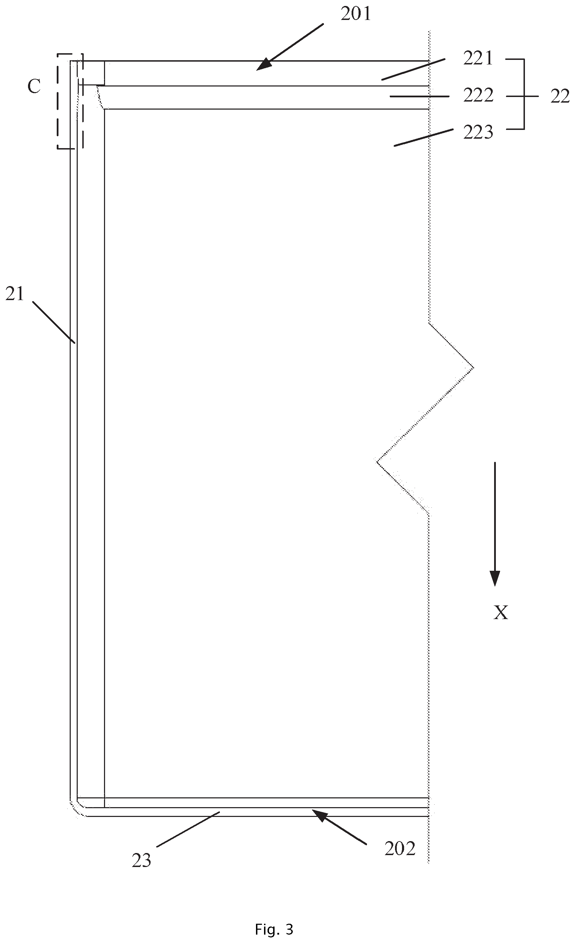

As shown in FIG. 1, FIG. 2, FIG. 3, and FIG. 4, a battery cell according to some embodiments of the present disclosure includes a top cover 1, a housing 2, and an electrode assembly 3. The housing 2 is provided with an accommodating cavity 20. The electrode assembly 3 is arranged in the accommodating cavity 20. The accommodating cavity 20 includes an opening 201 and a cavity bottom 202 opposite to the opening 201. The top cover 1 is configured to cover and seal the opening 201. The battery cell has a first direction X. The housing 2 includes two first side plates 21 opposite to each other. Extending directions of the first side plates 21 are parallel to the first direction X. At least one of the first side plates 21 includes an opening portion 211, a first thickened portion 212, and a first body portion 213 arranged in sequence in the first direction X. The first thickened portion 212 protrudes toward an interior of the accommodating cavity 20. A thickness of the first thickened portion 212 is greater than a thickness of the opening portion 211 and is greater than a thickness of the first body portion 213.

The first thickened portion 212 includes a first transition segment 2121, a thickened segment 2122, and a second transition segment 2123 distributed in sequence in the first direction X. An inner peripheral surface of the first transition segment 2121 extends from the opening portion 211 to the thickened segment 2122 to form a first stepped surface 214. An inner peripheral surface of the second transition segment 2123 extends obliquely from the first body portion 213 to the thickened segment 2122 to form a second stepped surface 215. The top cover 1 is located on a side of the first stepped surface 214 away from the electrode assembly 3. The first stepped surface 214 is configured to limit the top cover 1 during welding of the top cover 1 and the housing 2.

In the embodiments of the present disclosure, the first thickened portion 212 protrudes toward the interior of the accommodating cavity 20, and the thickness of the first thickened portion 212 is greater than the thickness of the opening portion 211 and the thickness of the first body portion 213. Thus, the housing 2 is partially thickened to enhance the structural strength of the housing 2 while ensuring the energy density of the battery cell. The inner peripheral surface of the first transition segment 2121 extends from the opening portion 211 to the thickened segment 2122 to form the first stepped surface 214. The top cover 1 is located on the side of the first stepped surface 214 away from the electrode assembly 3. The first stepped surface 214 is configured to support and limit the top cover 1, to improve the stability of connection of the housing 2 and the top cover 1. The inner peripheral surface of the second transition segment 2123 extends obliquely from the first body portion 213 to the thickened segment 2122 to form the second stepped surface 215, which can reduce the occupation of space in the housing 2, improve the energy density of the battery cell, and facilitate processing.

It should be noted that the top cover 1 is arranged on the side of the first stepped surface 214 away from the electrode assembly 3, and in practical applications, the top cover 1 may directly press against the first stepped surface 214 to limit the top cover 1; or there is a certain distance between the top cover 1 and the first stepped surface 214, and the first stepped surface 214 can pre-limit the top cover 1 to prevent the top cover 1 from sliding down too much.

In a specific application, as shown in FIG. 2, FIG. 3, and FIG. 4, the first direction X is a height direction of the battery cell, and the extending directions of the first side plates 21 are parallel to the first direction X. Alternatively, the first direction X may be a direction from the opening 201 to the cavity bottom 202 or a height direction of the housing 2. Each of the first side plates 21 includes an opening portion 211, a first thickened portion 212, and a first body portion 213 arranged in sequence in the height direction. The first thickened portion 212 protrudes toward an interior of the accommodating cavity 20. A thickness of the first thickened portion 212 is greater than a thickness of the opening portion 211 and is greater than a thickness of the first body portion 213. Therefore, the first side plates 21 are partially thickened, to enhance the structural strength of the housing 2 without affecting the space occupied by the electrode assembly 3, i.e., without affecting the energy density of the battery cell.

It can be understood that the first thickened portion 212 protrudes toward the interior of the accommodating cavity 20 to facilitate the connection between the top cover 1 and the housing 2. A cross section of a part of the first thickened portion 212 protruding from the opening portion 211 and the first body portion 213 may be triangular or trapezoidal, which may be set by those skilled in the art according to practical requirements and is not limited in the present disclosure.

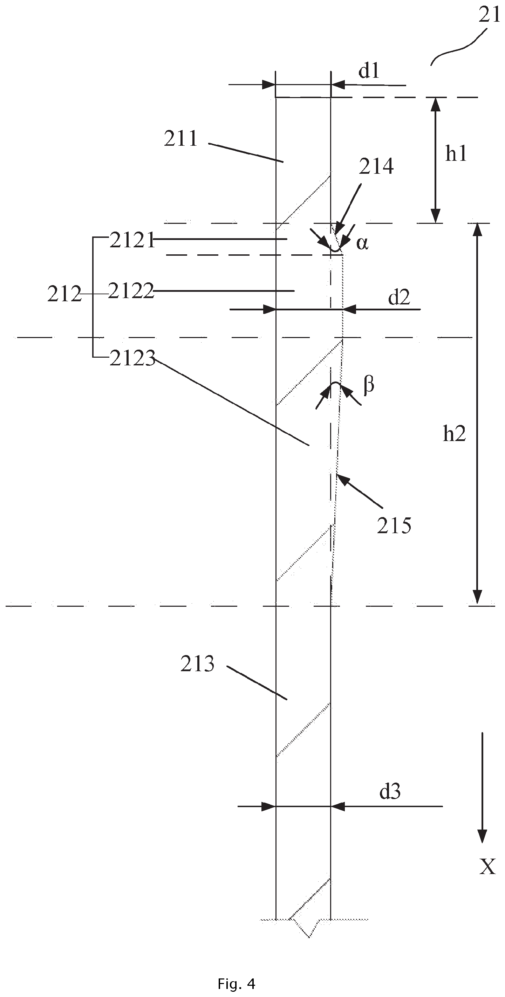

In a specific application, as shown in FIG. 4, the inner peripheral surface of the first transition segment 2121 extends from the opening portion 211 to the thickened segment 2122 to form the first stepped surface 214, so that the first stepped surface 214 limits the top cover 1 in the process of welding the top cover 1 to the first side plate 21. In addition, the arrangement of the first stepped surface 214 can avoid a sudden change in thickness between the opening portion 211 and the first thickened portion 212, which may otherwise cause stress concentration during processing, cause fatigue cracks after long-term use, and so on.

It can be understood that the inner peripheral surface of the second transition segment 2123 extends obliquely from the first body portion 213 to the thickened segment 2122 to form the second stepped surface 215, and in practical use, the second transition segment 2123 is closer to the electrode assembly 3, and the second stepped surface 215 is an inclined surface, which can reduce the occupation of space in the accommodating cavity 20, avoid interference with the electrode assembly 3, and provide more available space for the electrode assembly 3. In addition, the second stepped surface 215 enables the housing 2 to be better demolded during processing, making processing easier, and also facilitates stretching of the material during stamping of the housing 2.

It should be noted that the first side plate 21 is integrally formed, and the first transition segment 2121, the thickened segment 2122, the second transition segment 2123 may be formed by stamping, cutting, or other means, which may be set by those skilled in the art according to practical requirements and is not limited in the present disclosure.

In a specific application, the housing 2 is provided with the accommodating cavity 20, the electrode assembly 3 and the like are placed in the accommodating cavity 20, and the top cover 1 covers and seals the opening 201 of the accommodating cavity 20, thereby forming a sealed space to prevent leakage of an electrolyte solution or the like in the accommodating cavity 20. The housing 2 may be of a variety of shapes and sizes. The shape of the housing 2 may be determined by the specific shape and size of the electrode assembly 3. The housing 2 may be made of a variety of materials, for example, copper, iron, aluminum, stainless steel, aluminum alloy, etc.

It can be understood that the shape of the top cover 1 matches the shape of the housing 2 to cover and seal the opening 201. The top cover 1 may be made of a material having a certain hardness and strength to prevent the top cover 1 from deforming when subjected to pressure or collision, thereby improving the structural strength and reliability of the battery cell.

As shown in FIG. 1, in some embodiments of the present disclosure, the top cover 1 is further provided with a terminal 11 electrically connected to the electrode assembly 3 to output electric energy from or input electric energy to the battery cell. A material of the top cover 1 includes at least one of copper, iron, aluminum, stainless steel, aluminum alloy, etc., which may be set by those skilled in the art according to practical requirements and is not limited in the present disclosure.

It should be noted that the electrode assembly 3 is a component in which an electrochemical reaction occurs in the battery cell, and one or more electrode assemblies 3 may be arranged in the accommodating cavity 20. The electrode assembly 3 is mainly formed by a positive electrode plate and a negative electrode plate that are wound or laminated together. A separator is generally arranged between the positive electrode plate and the negative electrode plate. The separator is configured to separate the positive electrode plate and the negative electrode plate to prevent an internal short circuit. A portion of the positive electrode plate having an active material and a portion of the negative electrode plate having an active material constitute a main body of the electrode assembly.

As shown in FIG. 1, in some embodiments of the present disclosure, the electrode assembly 3 further includes a tab 31 and the tab 31 is electrically connected to the terminal 11.

It should be noted that the tab 31 and the terminal 11 may be directly connected or may be connected by a connection piece. The tab 31 includes a positive tab and a negative tab. The positive tab is composed of a portion of the positive electrode plate not having the active material. The negative tab is composed of a portion of the negative electrode plate not having the active material. The positive tab and the negative tab may be both located at one end of the main body or may be located at two ends of the main body, respectively.

In some embodiments of the present disclosure, an explosion-proof valve is arranged on the housing 2 to release pressure inside the battery cell.

As shown in FIG. 4, in some embodiments of the present disclosure, a first angle α is defined between the first stepped surface 214 and a side surface of the opening portion 211 facing the accommodating cavity 20, a second angle β is defined between the second stepped surface 215 and a side surface of the first body portion 213 facing the accommodating cavity 20, the thickness of the opening portion 211 is defined as d1, a maximum thickness of the first thickened portion 212 is defined as d2, and the thickness of the first body portion 213 is defined as d3, where 1 mm≤(d2-d1)/tanα+(d2-d3)/tanβ≤24 mm.

In the embodiments of the present disclosure, setting the relationship (d2-d1)/tanα+(d2-d3)/tanβ between the first angle α, the second angle β, the thickness d1 of the opening portion 211, the maximum thickness d2 of the first thickened portion 212, and the thickness d3 of the first body portion 213 within an appropriate range can prevent deformation of the first side plate 21 during processing while ensuring smooth mounting of the electrode assembly 3, i.e., without interference with the electrode assembly 3.

It should be noted that the side surface of the opening portion 211 facing the accommodating cavity 20 is a plane, and the plane where the side surface of the opening portion 211 facing the accommodating cavity 20 lies is parallel to the first direction X. As shown in FIG. 2, the side surface of the opening portion 211 facing the accommodating cavity 20 extends in the height direction of the battery cell. Similarly, the side surface of the first body portion 213 facing the accommodating cavity 20 is also a plane.

It should be noted that the first side plate 21 is generally formed by stamping, and in a specific processing process, the first thickened portion 212 is formed by stamping. Limited by the ductility of the material of the first side plate 21, when the value range of (d2-d1)/tanα+(d2-d3)/tanβ is less than 1 mm, the first side plate 21 will be partially deformed, affecting the demolding after processing; and when the value range of (d2-d1)/tanα+(d2-d3)/tanβ is greater than 24 mm, the mounting of the electrode assembly 3 will be affected, i.e., the first side plate 21 will interfere with the electrode assembly 3 during the mounting process.

In a specific application, (d2-d1)/tanα+(d2-d3)/tanβ may be set to 1 mm, 2 mm, 4 mm, 6 mm, 8 mm, 10 mm, 12 mm, 14 mm, 16 mm, 18 mm, 20 mm, 22 mm, 24 mm, etc. or fall within a range defined by any two of the above values.

It can be understood that when the cross section of the part of the first thickened portion 212 protruding from the opening portion 211 and the first body portion 213 is triangular, (d2-d1)/tanα+(d2-d3)/tanβ is equal to the height h2 of the first thickened portion 212; and when the cross section of the part of the first thickened portion 212 protruding from the opening portion 211 and the first body portion 213 is trapezoidal, (d2-d1)/tanα+(d2-d3)/tanβ is less than the height h2 of the first thickened portion 212. The value of the height h2 of the first thickened portion 212 affects the space for mounting the electrode assembly 3, and also affects the mounting of the top cover 1 and the range of strength enhancement to the housing 2.

It should be noted that the height h2 of the first thickened portion 212 refers to a dimension of the first thickened portion in the first direction X, and may be measured with an instrument such as a measuring ruler or line-of-sight meter.

It should be noted that the maximum thickness of the first thickened portion 212 is d2, and a part of the first thickened portion 212 with the maximum thickness may be a ridge or a surface depending on the shape of the first thickened portion 212.

As shown in FIG. 4, in some embodiments of the present disclosure, the battery cell satisfies: 3 mm≤(d2-d1)/tanα+(d2-d3)/tanβ≤6 mm.

In the embodiments of the present disclosure, setting the relationship (d2-d1)/tanα+(d2-d3)/tanβ between the first angle α, the second angle β, the thickness d1 of the opening portion 211, the maximum thickness d2 of the first thickened portion 212, and the thickness d3 of the first body portion 213 within an appropriate range can prevent deformation of the first side plate 21 during processing while ensuring smooth mounting of the electrode assembly 3, i.e., without interference with the electrode assembly 3.

In a specific application, (d2-d1)/tanα+(d2-d3)/tanβ may be set to 3 mm, 3.1 mm, 3.2 mm, 3.5 mm, 4 mm, 4.5 mm, 5 mm, 5.5 mm, 5.8 mm, 5.9 mm, 6 mm, etc. or fall within a range defined by any two of the above values.

It should be noted that when the value range of (d2-d1)/tanα+(d2-d3)/tanβ is less than 3 mm, the structural strength of the first side plate 21 is not significantly enhanced; and when the value range of (d2-d1)/tanα+(d2-d3)/tanβ is greater than 6 mm, too much space in the accommodating cavity 20 is occupied, resulting in a reduction in the space available for the electrode assembly 3.

As shown in FIG. 4, in some embodiments of the present disclosure, a first angle α is defined between the first stepped surface 214 and a side surface of the opening portion 211 facing the accommodating cavity 20, where 10°≤α≤40°.

In the embodiments of the present disclosure, setting the first angle α between the first stepped surface 214 and the side surface of the opening portion 211 facing the accommodating cavity 20 within an appropriate range can ensure the stability of connection between the top cover 1 and the housing 2 when the top cover 1 is mounted, to avoid interference with the mounting of the electrode assembly 3 and prevent deformation of the first side plate 21 during processing.

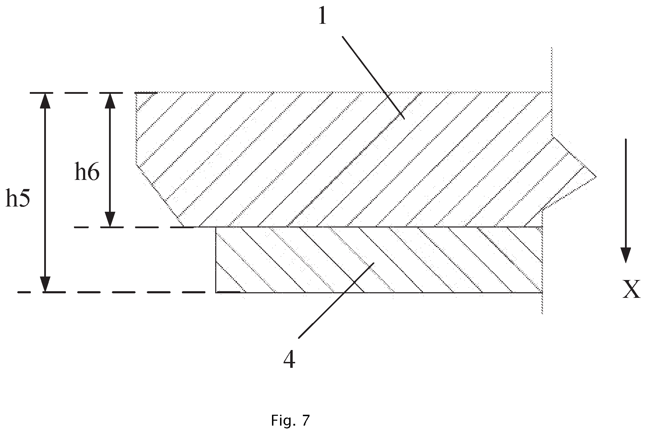

It should be noted that as shown in FIG. 7, in practical use, a chamfer is provided on a side of the top cover 1 facing the interior of the accommodating cavity 20. When the first angle α between the first stepped surface 214 and the side surface of the opening portion 211 facing the accommodating cavity 20 is less than 10°, the top cover 1 and the first stepped surface 214 are in line contact, with a small contact area and poor connection stability. When the first angle α between the first stepped surface 214 and the side surface of the opening portion 211 facing the accommodating cavity 20 is greater than 40°, the first stepped surface 214 interferes with the chamfer on the top cover 1, and provided that the maximum thickness of the first thickened portion 212 is constant, a larger part of the first thickened portion 212 protrudes toward the interior of the accommodating cavity 20, which is likely to interfere with the mounting of the electrode assembly 3 and deform during processing.

In a specific application, the first angle α between the first stepped surface 214 and the side surface of the opening portion 211 facing the accommodating cavity 20 may be set to 10°, 11°, 15°, 20°, 25°, 30°, 35°, 39°, 40°, etc. or fall within a range defined by any two of the above values.

As shown in FIG. 4, in some embodiments of the present disclosure, a second angle β is defined between the second stepped surface 215 and a side surface of the first body portion 213 facing the accommodating cavity 20, where 0.5°<β≤10°.

In the embodiments of the present disclosure, setting the second angle β between the second stepped surface 215 and the side surface of the first body portion 213 facing the accommodating cavity 20 within an appropriate range can avoid interference with the mounting of the electrode assembly 3 and prevent deformation of the first side plate 21 during processing.

It should be noted that provided that the thicknesses of the first thickened portion 212 and the first body portion 213 are constant, when the second angle β between the second stepped surface 215 and the side surface of the first body portion 213 facing the accommodating cavity 20 is less than 0.5°, the second transition segment 2123 will extend excessively and occupy too much space in the accommodating cavity 20, affecting the mounting of the electrode assembly 3 and interfering with the electrode assembly 3; and when the second angle β between the second stepped surface 215 and the side surface of the first body portion 213 facing the accommodating cavity 20 is greater than 10°, the first side plate 21 will deform during processing due to the ductility of its material.

In a specific application, the second angle β between the second stepped surface 215 and the side surface of the first body portion 213 facing the accommodating cavity 20 may be set to 0.5°, 0.6°, 1°, 1.5°, 2°, 3°, 4°, 5°, 6°, 7°, 8°, 9°, 9.5°, 10°, etc. or fall within a range defined by any two of the above values.

In some embodiments of the present disclosure, the thickness of the opening portion 211 is defined as d1, and a maximum thickness of the first thickened portion 212 is defined as d2, where 0.1 mm≤d2-d1≤0.2 mm.

As shown in FIG. 4, in some embodiments of the present disclosure, the thickness of the opening portion 211 is defined as d1, and a maximum thickness of the first thickened portion 212 is defined as d2, where 0.15 mm≤d2-d1≤0.2 mm.

In the embodiments of the present disclosure, setting the difference between the maximum thickness d2 of the first thickened portion 212 and the thickness d1 of the opening portion 211 within an appropriate range can ensure that the top cover 1 is well supported, to avoid interference with the mounting of the electrode assembly 3 and prevent deformation of the first side plate 21 during processing.

It should be noted that the difference between the maximum thickness d2 of the first thickened portion 212 and the thickness d1 of the opening portion 211 is a thickness by which the first thickened portion 212 protrudes from the side surface of the opening portion 211 facing the accommodating cavity 20. When the difference between the maximum thickness d2 of the first thickened portion 212 and the thickness d1 of the opening portion 211 is less than 0.15 mm, the structural strength of the housing 2 is not significantly enhanced, and the top cover 1 cannot be well supported. When the difference between the maximum thickness d2 of the first thickened portion 212 and the thickness d1 of the opening portion 211 is greater than 0.2 mm, the mounting of the electrode assembly 3 is interfered, and the first side plate 21 may deform during processing.

In a specific application, the difference between the maximum thickness d2 of the first thickened portion 212 and the thickness d1 of the opening portion 211 may be set to 0.15 mm, 0.16 mm, 0.17 mm, 0.18 mm, 0.19 mm, 0.2 mm, etc. or fall within a range defined by any two of the above values.

In some embodiments of the present disclosure, the thickness of the first body portion 213 is defined as d3, and a maximum thickness of the first thickened portion 212 is defined as d2, where 0.1 mm≤d2-d3≤0.2 mm.

As shown in FIG. 4, in some embodiments of the present disclosure, the thickness of the first body portion 213 is defined as d3, and a maximum thickness of the first thickened portion 212 is defined as d2, where 0.15 mm≤d2-d3≤0.2 mm.

In the embodiments of the present disclosure, setting the difference between the maximum thickness d2 of the first thickened portion 212 and the thickness d3 of the first body portion 213 within an appropriate range can avoid interference with the mounting of the electrode assembly 3 and prevent deformation of the first side plate 21 during processing.

It should be noted that the difference between the maximum thickness d2 of the first thickened portion 212 and the thickness d3 of the first body portion 213 is a thickness by which the first thickened portion 212 protrudes from the surface of the first body portion 213 facing the accommodating cavity 20. When the difference between the maximum thickness d2 of the first thickened portion 212 and the thickness d3 of the first body portion 213 is less than 0.15 mm, the structural strength of the housing 2 is not significantly enhanced, resulting an insufficient overall structural strength of the housing. When the difference between the maximum thickness d2 of the first thickened portion 212 and the thickness d3 of the first body portion 213 is greater than 0.2 mm, the mounting of the electrode assembly 3 is interfered, and the first side plate 21 may deform during processing.

In a specific application, the difference between the maximum thickness d2 of the first thickened portion 212 and the thickness d3 of the first body portion 213 may be set to 0.15 mm, 0.16 mm, 0.17 mm, 0.18 mm, 0.19 mm, 0.2 mm, etc. or fall within a range defined by any two of the above values.

The influence of the corresponding values on the battery cell in the above embodiments will be described below with reference to the results of specific examples and comparative examples.

In the practical design and production process, the housing 2 is generally formed by stamping of a plate material, and the plate material is plastically deformed during the stamping process to reach a required shape and size. However, after the stamping is completed, the stamping die needs to be removed from the housing 2.

Based on this, on one hand, it is determined whether the demolding is smooth by observing whether the housing 2 is partially deformed after the processing of the housing 2. It should be noted that when demolding is performed after the processing of the housing 2, if the demolding is affected, the housing 2 will be partially deformed after the die is removed. In other words, when the housing 2 is partially deformed, it indicates that the demolding is affected, and corresponds to a result "Yes" in the following table; and when the housing 2 is not partially deformed, it indicates that the demolding is not affected, and corresponds to a result "No" in the following table. On the other hand, if the size of the housing 2 is not appropriate, the electrode assembly 3 interferes with the housing 2 during mounting of the electrode assembly 3 into the accommodating cavity 20. Therefore, whether the values in the above embodiments are appropriate is determined by determining whether the electrode assembly 3 interferes with the housing 2 during the mounting process. When the electrode assembly 3 interferes with the housing 2, the size of the housing 2 is determined to be inappropriate. When the electrode assembly 3 does not interfere with the housing 2 during the mounting process, the size of the housing 2 is determined to be appropriate.

**Table One: Test data related to interference and demolding**

| | α Degree | β Degree | d2-d1 (mm) | d2-d3 (mm) | (d2-d1)/tanα +(d2-d3)/tanβ (mm) | Interfered or not | Deformed or not |
|---|---|---|---|---|---|---|---|
| Example 1 | 40 | 10 | 0.15 | 0.15 | 1.03 | No | No |
| Example 2 | 10 | 0.5 | 0.15 | 0.15 | 18.04 | No | No |
| Example 3 | 40 | 10 | 0.2 | 0.2 | 1.37 | No | No |
| Example 4 | 10 | 0.5 | 0.2 | 0.2 | 24.05 | Yes | No |
| Example 5 | 35 | 3 | 0.15 | 0.15 | 3.08 | No | No |
| Example 6 | 35 | 3 | 0.2 | 0.2 | 4.10 | No | No |
| Example 7 | 23 | 7 | 0.15 | 0.15 | 1.58 | No | No |
| Example 8 | 15 | 4 | 0.15 | 0.15 | 2.70 | No | No |
| Example 9 | 11 | 0.8 | 0.15 | 0.15 | 11.51 | No | No |
| Comparative Example 1 | 9 | 0.4 | 0.3 | 0.3 | 44.87 | Yes | No |
| Comparative Example 2 | 45 | 15 | 0.05 | 0.05 | 0.24 | No | Yes |

It can be seen from Table One that:
when 1 mm≤(d2-d1)/tanα+(d2-d3)/tanβ≤24 mm, the electrode assembly 3 did not interfere with the housing 2 during the mounting process, and the housing 2 was not partially deformed during processing, i.e., the demolding was smooth. When (d2-d1)/tanα+(d2-d3)/tanβ<1 mm, as shown in Comparative Example 2, the housing 2 was partially deformed, resulting in unsmooth demolding. When (d2-d1)/tanα+(d2-d3)/tanβ>24 mm, as shown in Comparative Example 1 and Example 4, the electrode assembly 3 interfered with the housing 2 during the mounting process.

When 0.5°<β≤10°, the electrode assembly 3 did not interfere with the housing 2 during the mounting process, and the housing 2 was not partially deformed during processing, i.e., the demolding was smooth. When β<0.5°, as shown in Comparative Example 1, the electrode assembly 3 interfered with the housing 2 during the mounting process. When β>10°, as shown in Comparative Example 2, the housing 2 was partially deformed, resulting in unsmooth demolding.

When 0.15 mm≤d2-d1≤0.2 mm, the electrode assembly 3 did not interfere with the housing 2 during the mounting process, and the housing 2 was not partially deformed during processing, i.e., the demolding was smooth. When d2-d1<0.15 mm, as shown in Comparative Example 2, the housing 2 was partially deformed, resulting in unsmooth demolding. When d2-d1>0.2 mm, as shown in Comparative Example 1, the electrode assembly 3 interfered with the housing 2 during the mounting process.

When 0.15 mm≤d2-d3≤0.2 mm, the electrode assembly 3 did not interfere with the housing 2 during the mounting process, and the housing 2 was not partially deformed during processing, i.e., the demolding was smooth. When d2-d3<0.15 mm, as shown in Comparative Example 2, the housing 2 was partially deformed, resulting in unsmooth demolding. When d2-d3>0.2 mm, as shown in Comparative Example 1, the electrode assembly 3 interfered with the housing 2 during the mounting process.

From the above results, it can be inferred that provided that other conditions are the same, when the parameters are not within the selected value ranges in the present disclosure, the housing 2 will be partially deformed, resulting in unsmooth demolding, or resulting in interference between the housing 2 and the electrode assembly 3 during the mounting process. When the parameters are within the selected value ranges of the present disclosure, the above situations will not occur.

As shown in FIG. 4, in some embodiments of the present disclosure, a maximum thickness d2 of the first thickened portion 212 satisfies: 0.6 mm<d2<1.0 mm.

In the embodiments of the present disclosure, setting the maximum thickness d2 of the first thickened portion 212 within an appropriate range can ensure that the structural strength of the housing 2 is enhanced while avoiding poor forming of the housing 2 during processing.

It should be noted that because the housing 2 is formed by stamping of a plate material, the ductility of the plate material and the dimensional requirements of the structure after processing may result in the housing 2 being not be able to be formed and having defects such as notches.

It should be noted that when d2≤0.6 mm, i.e., when the maximum thickness of the first thickened portion 212 is insufficient, the structural strength of the housing 2 is not significantly enhanced, resulting an insufficient overall structural strength of the housing 2. When d2≥1 mm, i.e., when the maximum thickness of the first thickened portion 212 is too large, defects such as notches are present in the housing 2 during processing, resulting in poor forming of the housing 2.

In a specific application, the maximum thickness d2 of the first thickened portion 212 may be set to 0.65 mm, 0.7 mm, 0.75 mm, 0.8 mm, 0.85 mm, 0.9 mm, 0.99 mm, etc. or fall within a range defined by any two of the above values.

As shown in FIG. 4, in some embodiments of the present disclosure, the thickness d1 of the opening portion 211 satisfies: 0.4 mm<d1≤0.8 mm.

In the embodiments of the present disclosure, setting the thickness d1 of the opening portion 211 within an appropriate range can ensure the structural strength of the housing 2 while avoiding poor forming of the housing 2 during processing.

It should be noted that when d1≤0.4 mm, i.e., when the thickness of the opening portion 211 is insufficient, the overall structural strength of the housing 2 is insufficient. When d1>0.8 mm, i.e., when the thickness of the opening portion 211 is too large, defects such as notches are present in the housing 2 during processing, resulting in poor forming of the housing 2.

It can be understood that welding is performed between the opening portion 211 and the top cover 1 to seal the accommodating cavity 20, and if the thickness d1 of the opening portion 211 is too small, the final connection strength will be insufficient.

In a specific application, the thickness d1 of the opening portion 211 may be set to 0.45 mm, 0.5 mm, 0.55 mm, 0.6 mm, 0.65 mm, 0.7 mm, 0.75 mm, 0.8 mm, etc. or fall within a range defined by any two of the above values.

As shown in FIG. 4, in some embodiments of the present disclosure, the thickness d3 of the first body portion 213 satisfies: 0.5 mm<d3≤0.8 mm.

In the embodiments of the present disclosure, setting the thickness d3 of the first body portion 213 within an appropriate range can ensure the structural strength of the housing 2 while avoiding poor forming of the housing 2 during processing.

It should be noted that when d3≤0.5 mm, i.e., when the thickness of the first body portion 213 is insufficient, the overall structural strength of the housing 2 is insufficient. When d3>0.8 mm, i.e., when the thickness of the first body portion 213 is too large, defects such as notches are present in the housing 2 during processing, resulting in poor forming of the housing 2.

In a specific application, the thickness d3 of the first body portion 213 may be set to 0.51 mm, 0.52 mm, 0.55 mm, 0.6 mm, 0.65 mm, 0.7 mm, 0.75 mm, 0.8 mm, etc. or fall within a range defined by any two of the above values.

The influence of the corresponding values on the battery cell in the above embodiments will be described below with reference to the results of specific examples and comparative examples.

In the practical design and production process, the housing 2 is generally formed by stamping of a plate material, and the plate material is plastically deformed during the stamping process to reach a required shape and size. During stamping, because the housing 2 has four sides, an inappropriate size of a certain part of the housing 2 may cause the four sides of the housing 2 to be unable to fit together at this part, leading to the formation of defects such as notches, resulting in poor forming of the housing 2.

Based on this, on one hand, it is determined whether the selected value ranges in the above embodiments are appropriate by observing whether there is poor forming of the housing 2 after the processing of the housing 2, i.e., whether there are defects such as notches or excessively thin regions after the processing of the housing 2. When such a defect is observed after the processing of the housing 2, the structural strength of the housing does not meet a criterion. When no such defect is observed after the processing of the housing 2, the structural strength of the housing meets the criterion.

On the other hand, a strength test is performed on the housing 2 in accordance with IEC 62660-3 Secondary lithium-ion cells for the propulsion of electric road vehicles - Part 3: Safety requirements - 6.2.1: Mechanical shock. During the test, provided that the other conditions are the same (e.g., within specified temperature and humidity ranges, all the dimensions except for the above dimensions are the same), housings 2 with different values of d1, d2, and d3 are stably mounted on the test bench, and subjected to random vibration or sinusoidal vibration (where generally different frequencies and acceleration levels are set), and then the appearance of each housing 2 is inspected to check whether there are physical damage, cracking, or other visible defects. When physical damage, cracking, or other visible defects are observed in the appearance of the housing 2, it is determined that the structural strength of the housing does not meet the criterion. When no physical damage, crack, or other visible defect is observed in the appearance of the housing 2, it is determined that the structural strength of the housing meets the criterion.

**Table Two: Test data related to the structural strength and forming of the housing**

| | d1 (mm) | d2 (mm) | d3 (mm) | Subpar structural strength of the housing | Poor forming of the housing |
|---|---|---|---|---|---|
| Example 10 | 0.5 | 0.7 | 0.6 | No | No |
| Example 11 | 0.7 | 0.9 | 0.7 | No | No |
| Example 12 | 0.7 | 0.9 | 0.8 | No | No |
| Comparative Example 3 | 0.4 | 0.6 | 0.5 | Yes | No |
| Comparative Example 4 | 0.8 | 1 | 0.85 | No | Yes |

It can be seen from Table Two that:
when 0.4 mm<d1≤0.8 mm, the housing 2 was not partially cracked, and the housing 2 was well formed, i.e., there were no defects such as notches. When d1≤0.4 mm, as shown in Comparative Example 3, the housing 2 was partially cracked, resulting in insufficient structural strength of the housing 2. When d1>0.8 mm, as shown in Comparative Example 4, defects such as notches were formed in the housing 2, resulting in poor forming of the housing 2.

When 0.6 mm<d2<1.0 mm, the housing 2 was not partially cracked, and the housing 2 was well formed, i.e., there were no defects such as notches. When d2≤0.6 mm, as shown in Comparative Example 3, the housing 2 was partially cracked, resulting in insufficient structural strength of the housing 2. When d2≥1 mm, as shown in Comparative Example 4, defects such as notches were formed in the housing 2, resulting in poor forming of the housing 2.

When 0.5 mm<d3≤0.8 mm, the housing 2 was not partially cracked, and the housing 2 was well formed, i.e., there were no defects such as notches. When d3≤0.5 mm, as shown in Comparative Example 3, the housing 2 was partially cracked, resulting in insufficient structural strength of the housing 2. When d3≥0.8 mm, as shown in Comparative Example 4, defects such as notches were formed in the housing 2, resulting in poor forming of the housing 2.

From the above results, it can be inferred that provided that other conditions are the same, when the parameters are not within the selected value ranges in the present disclosure, the housing 2 may be partially cracked, resulting in insufficient structural strength of the housing 2, or defects such as notches are formed in the housing 2, resulting in poor forming of the housing 2. When the parameters are within the selected value ranges of the present disclosure, the above situations will not occur.

As shown in FIG. 4, in some embodiments of the present disclosure, the thickness d1 of the opening portion 211 and the thickness d3 of the first body portion 213 satisfy: d1≤d3.

In the embodiments of the present disclosure, setting the relationship between the thickness d1 of the opening portion 211 and the thickness d3 of the first body portion 213 within an appropriate range can ensure that the accommodating cavity 20 in the finally formed housing 2 has sufficient space to accommodate the electrode assembly 3, and ensure that the housing 2 has sufficient structural strength after being welded to the top cover 1.

It should be noted that when d1>d3, the thickness of the opening portion 211 is too large, space at the opening of the housing 2 is too small, and the electrode assembly 3 is likely to interfere with the housing 2 when being mounted into the accommodating cavity 20.

In some embodiments of the present disclosure, the thickness d1 of the opening portion 211 is equal to the thickness d3 of the first body portion 213.

In the embodiments of the present disclosure, setting the thickness d1 of the opening portion 211 and the thickness d3 of the first body portion 213 to be equal facilitates the processing of the first side plate 21, achieves a smoother transition between the first thickened portion 212 and the opening portion 211, and between the first thickened portion 212 and the first body portion 213, and ensures that the housing 2 is partially thickened to enhance the structural strength of the housing 2.

It should be noted that in practical processing, the first thickened portion 212 of the housing 2 is formed by stamping of a plate material, and setting the thickness d1 of the opening portion 211 to be equal to the thickness d3 of the first body portion 213 facilitates the processing of the housing 2 with the stamping die.

As shown in FIG. 4, in some embodiments of the present disclosure, in a direction from the opening portion 211 to the first body portion 213, the thickened segment 2122 has a uniform thickness, a thickness of the first transition segment 2121 gradually increases, and a thickness of the second transition segment 2123 gradually decreases.

In the embodiments of the present disclosure, the thickened segment 2122 has a uniform thickness, and a side surface of the thickened segment 2122 facing the accommodating cavity 20 is a plane parallel to the height direction of the battery cell, to ensure that the structural strength of the housing 2 is enhanced. In the direction from the opening portion 211 to the first body portion 213, the thickness of the first transition segment 2121 gradually increases, and the thickness of the second transition segment 2123 gradually decreases, so that the first thickened portion 212 has a trapezoidal cross section, which can prevent stress concentration to avoid defects such as cracking in practical applications and can facilitate the processing to reduce the processing costs.

It can be understood that the thickened segment 2122 has a uniform thickness, i.e., the thickness of each part of the thickened segment 2122 is equal, the thickness of the thickened segment 2122 is the maximum thickness d2 of the first thickened portion 212, and the thickness of the first transition segment 2121 gradually increases in the direction from the opening portion 211 to the first body portion 213, i.e., in the height direction of the battery cell, to form the first stepped surface 214, thereby reducing stress concentration and limiting the top cover 1 to prevent the top cover 1 from being misaligned in the height direction of the battery cell; and the thickness of the second transition segment 2123 gradually decreases to form the second stepped surface 215, thereby reducing stress concentration, reducing the occupation of the space in the accommodating cavity 20, avoiding interference during mounting of the electrode assembly 3, and ensuring the energy density of the battery cell.

It should be noted that the thickness of the thickened segment 2122 is a vertical distance between the side surface of the thickened segment 2122 facing the accommodating cavity 20 and a side surface of the thickened segment 2122 facing away from the accommodating cavity 20, i.e., a distance between two opposing surfaces of the thickened segment 2122 in a direction perpendicular to the first direction X. The thickness of the first transition segment 2121 is a vertical distance between a point on the first stepped surface 214 and a side surface of the first transition segment 2121 facing away from the accommodating cavity 20, i.e., a distance between the point on the first stepped surface 214 and the side surface of the first transition segment 2121 facing away from the accommodating cavity 20 in a direction perpendicular to the first direction X. Similarly, the thickness of the second transition segment 2123 is a vertical distance between a point on the second stepped surface 215 and a side surface of the second transition segment 2123 facing away from the accommodating cavity 20, i.e., a distance between the point on the second stepped surface 215 and the side surface of the second transition segment 2123 facing away from the accommodating cavity 20 in a direction perpendicular to the first direction X.

As shown in FIG. 4 and FIG. 7, in some embodiments of the present disclosure, the battery cell further includes an insulating layer 4, where the insulating layer 4 is arranged on a side of the top cover 1 facing the cavity bottom 202, a total height of the top cover 1 and the insulating layer 4 is defined as h5, a height of the opening portion 211 is defined as h1, a height of the first thickened portion 212 is defined as h2, and a height of the top cover 1 is defined as h6, where h6<h1+h2≤h5+15 mm.

It should be noted that the total height h5 of the top cover 1 and the insulating layer 4 is the sum of maximum dimensions of the top cover 1 and the insulating layer 4 in the first direction X, and may be measured with an instrument such as a measuring ruler or line-of-sight meter.

It should be noted that the height h1 of the opening portion 211 refers to a dimension of the opening portion in the first direction, and may be measured with an instrument such as a measuring ruler or line-of-sight meter.

It should be noted that the height h2 of the first thickened portion 212 refers to a dimension of the first thickened portion 212 in the first direction, and may be measured with an instrument such as a measuring ruler or line-of-sight meter.

In the embodiments of the present disclosure, setting the relationship between the sum of the height h1 of the opening portion 211 and the height h2 of the first thickened portion 212 and the total height h5 of the top cover 1 and the insulating layer 4 within an appropriate range can provide sufficient space between the top cover 1 and the housing 2 for welding, thereby ensuring the welding quality, and prevent the top cover 1 from interfering with the electrode assembly 3 in the accommodating cavity 20 after being mounted.

In a specific application, the insulating layer 4 is configured to isolate electrical connection components in the housing 2 from the top cover 1 to reduce the risk of short circuit. A material of the insulating layer 4 includes at least one of plastic, rubber, ceramic, a composite insulating material, etc., which may be set by those skilled in the art according to practical requirements and is not limited in the present disclosure.

It should be noted that when h1+h2≤h6, there is no sufficient space between the top cover 1 and the housing 2 for welding, the welding quality is poor, and the welding strength is insufficient. When h1+h2>h5+15 mm, the insulating layer 4 interferes with the electrode assembly 3 after the top cover 1 is mounted to the housing 2.

In a specific application, the thickness d3 of the first body portion 213 may be set to h6+0.1 mm, h6+0.2 mm, h6+0.3 mm, h6+0.4 mm, h6+0.5 mm, h6+0.6 mm, h6+1 mm, h5, h5+1 mm, h5+2 mm, h5+3 mm, h5+5 mm, h5+7 mm, h5+10 mm, h5+15 mm, etc. or fall within a range defined by any two of the above values.

As shown in FIG. 4, in some embodiments of the present disclosure, in the first direction X, a height of the opening portion 211 is defined as h1, and a height of the top cover 1 is defined as h6, where 0 mm≤h6-h1≤0.6 mm.

In the embodiments of the present disclosure, setting the difference between the height h6 of the top cover 1 and the height h1 of the opening portion 211 within an appropriate range ensures that the top cover 1 can be smoothly mounted at the opening of the housing 2, and enables the top cover 1 and the housing 2 to well fit with each other, to avoid a too large height difference between the top cover 1 and the housing 2.

It should be noted that in practical production, an upper surface of the top cover 1 is flush with an upper surface of the housing 2, i.e., an upper surface of the first side plate 21, and the top cover 1 is welded to the opening portion 211, thereby ensuring the fitting between the top cover 1 and the housing 2.

It should be noted that when h6-h1>0.6 mm, the height difference between the top cover 1 and the housing 2 is too large, resulting in poor fitting between the top cover 1 and the housing 2.

In a specific application, the difference between the height h6 of the top cover 1 and the height h1 of the opening portion 211 may be set to 0.05 mm, 0.1 mm, 0.2 mm, 0.3 mm, 0.4 mm, 0.45 mm, 0.5 mm, 0.55 mm, 0.6 mm, etc. or fall within a range defined by any two of the above values.

In some embodiments of the present disclosure, in the first direction X, a height of the opening portion 211 is defined as h1, where 0.9 mm≤h1≤2.1 mm.

In the embodiments of the present disclosure, setting the height h1 of the opening portion 211 within an appropriate range ensures a sufficient welding region between the first side plate 21 and the top cover 1, and ensures the fitting between the housing 2 and the top cover 1.

It should be noted that when h1<0.9 mm, the height h1 of the opening portion 211 is too small, and the welding region between the opening portion 211 and the top cover 1 is too small, failing to ensure the welding strength. When h1>2.1 mm, the height difference between the opening portion 211 and the top cover 1 is too large, failing to ensure the fitting between the housing 2 and the top cover 1.

In a specific application, the height h1 of the opening portion 211 may be set to 0.9 mm, 1 mm, 1.2 mm, 1.4 mm, 1.6 mm, 1.8 mm, 1.9 mm, 2 mm, 2.1 mm, etc. or fall within a range defined by any two of the above values.

In some embodiments of the present disclosure, the height h6 of the top cover 1 satisfies: 1.5 mm≤h6≤2.5 mm.

In the embodiments of the present disclosure, setting the height h6 of the top cover 1 within an appropriate range ensures the range of the welding region between the top cover 1 and the housing 2, and ensures the fitting between the top cover 1 and the housing 2.

It should be noted that when h6<1.5 mm, the height h6 of the top cover 1 is too small, and the welding region between the housing 2 and the top cover 1 is too small, failing to ensure the welding strength; and when h6>2.5 mm, the height difference between the top cover 1 and the housing 2 is too large, failing to ensure the fitting between the housing 2 and the top cover 1.

In a specific application, the height h6 of the top cover 1 may be set to 1.5 mm, 1.6 mm, 1.7 mm, 1.8 mm, 1.9 mm, 2 mm, 2.1 mm, 2.2 mm, 2.3 mm, 2.4 mm, 2.5 mm, etc. or fall within a range defined by any two of the above values.

In some embodiments of the present disclosure, the housing 2 further includes a bottom plate 23. One end of each of the first side plates 21 away from the top cover 1 is fixedly connected to the bottom plate 23, thereby forming a stable structure of the housing 2.

The influence of the corresponding values on the battery cell in the above embodiments will be described below with reference to the results of specific examples and comparative examples.

The upper surface of the top cover 1 is generally flush with or have only a small height distance with the upper surface of the housing 2, i.e., the upper surface of the first side plate 21, and the top cover 1 is welded to the opening portion 211, thereby ensuring the fitting between the top cover 1 and the housing 2. Based on this, it is determined whether the selected value ranges in the above embodiments are appropriate by measuring whether the height difference between the upper surface of the top cover 1 and the upper surface of the housing 2 is greater than 0.6 mm when the top cover 1 is mounted to the housing 2. It should be noted that when the height difference between the upper surface of the top cover 1 and the upper surface of the housing 2 is less than 0.6 mm, it is determined that the fitting between the housing 2 and the top cover 1 is good; and when the height difference between the upper surface of the top cover 1 and the upper surface of the housing 2 is greater than 0.6 mm, it is determined that the fitting between the housing 2 and the top cover 1 is poor.

**Table Three: Test data related to the mounting of the top cover**

| | h6 (mm) | h1 (mm) | Fitting |
|---|---|---|---|
| Example 13 | 1.2 | 0.9 | Good |
| Example 14 | 1.5 | 1 | Good |
| Example 15 | 1.5 | 1.4 | Good |
| Example 16 | 2 | 1.5 | Good |
| Example 17 | 2 | 1.8 | Good |
| Example 18 | 2 | 2.1 | Good |
| Comparative Example 5 | 1.3 | 0.5 | Poor |
| Comparative Example 6 | 3 | 2.2 | Poor |

It can be seen from Table Three that:
When 0.9 mm≤h1≤2.1 mm, a sufficient welding region between the top cover 1 and the housing 2 could be ensured, and the fitting between the top cover 1 and the housing 2 could be ensured. When h1<0.9 mm, as shown in Comparative Example 5, the welding region was too small, the welding strength was insufficient, and the fitting between the top cover 1 and the housing 2 was poor. When h1>2.1 mm, as shown in Comparative Example 6, the fitting between the top cover 1 and the housing 2 is poor.

When 1.5 mm≤h6≤2.5 mm, a sufficient welding region between the top cover 1 and the housing 2 could be ensured, and the fitting between the top cover 1 and the housing 2 could be ensured. When h6<1.5 mm, as shown in Comparative Example 5, the welding region was too small, the welding strength was insufficient, and the fitting between the top cover 1 and the housing 2 was poor. When h6>2.5 mm, as shown in Comparative Example 6, the fitting between the top cover 1 and the housing 2 is poor.

From the above results, it can be inferred that provided that other conditions are the same, when the parameters are not within the selected value ranges in the present disclosure, the welding region will be too small, the welding strength will be insufficient, or the fitting between the top cover 1 and the housing 2 will be poor; and when the parameters are within the selected value ranges of the present disclosure, the above situations will not occur.

As shown in FIG. 4, in some embodiments of the present disclosure, in the first direction X, a height h2 of the first thickened portion 212 satisfies: 1.2 mm≤h2≤25 mm.

In the embodiments of the present disclosure, setting the height h2 of the first thickened portion 212 within an appropriate range can ensure that the structural strength of the housing 2 is enhanced, and avoid occupying too much space in the accommodating cavity 20 and interfering with the electrode assembly 3 to affect the energy density of the battery cell.

It should be noted that when h2<1.2 mm, the height of the first thickened portion 212 is too small, and the structural strength of the housing 2 is not significantly enhanced, failing to achieve a preset strength enhancement effect. When h2>25 mm, the height of the first thickened portion 212 is too large, the first thickened portion 212 occupies too much space in the accommodating cavity 20 and interferes with the electrode assembly 3 to affect the energy density of the battery cell, and defects such as notches may be formed during processing due to the ductility of the plate material.

In a specific application, the height h2 of the first thickened portion 212 may be set to 1.2 mm, 5 mm, 8 mm, 10 mm, 12 mm, 14 mm, 16 mm, 18 mm, 20 mm, 22 mm, 25 mm, etc. or fall within a range defined by any two of the above values.

As shown in FIG. 4, in some embodiments of the present disclosure, a height h2 of the first thickened portion 212 satisfies: 3.6 mm≤h2≤6.9 mm.

In the embodiments of the present disclosure, setting the height h2 of the first thickened portion 212 within an appropriate range can ensure that the structural strength of the housing 2 is enhanced, and avoid occupying too much space in the accommodating cavity 20 to interfere with the electrode assembly 3 and affect the energy density of the battery cell.

It should be noted that when h2<3.6 mm, the height of the first thickened portion 212 is too small, and the structural strength of the housing 2 is not significantly enhanced, failing to achieve a preset strength enhancement effect. When h2>6.9 mm, the height of the first thickened portion 212 is too large, the first thickened portion 212 occupies too much space in the accommodating cavity 20 and interferes with the electrode assembly 3 to affect the energy density of the battery cell.

In a specific application, the height h2 of the first thickened portion 212 may be set to 3.6 mm, 3.8 mm, 4 mm, 4.5 mm, 4.8 mm, 5 mm, 5.5 mm, 5.8 mm, 6.9 mm, etc. or fall within a range defined by any two of the above values.

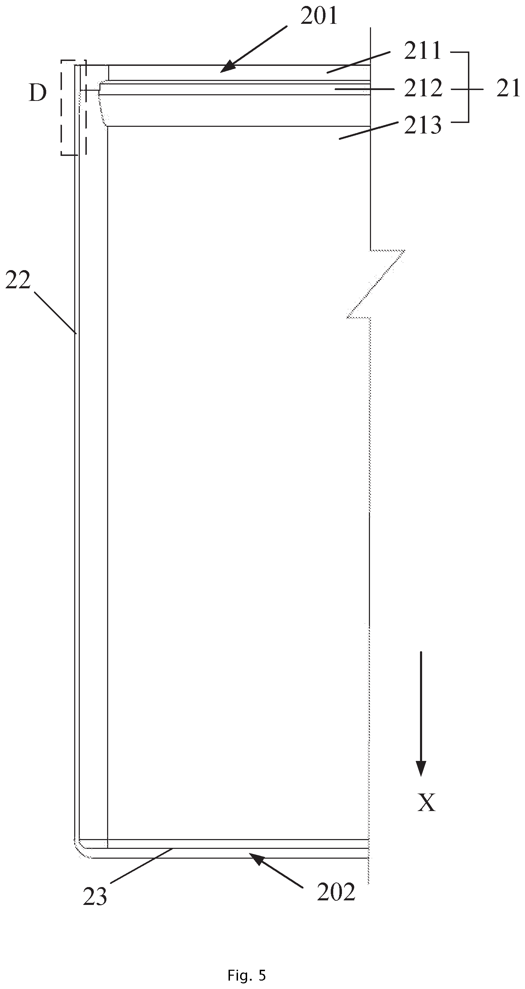

As shown in FIG. 2, FIG. 5, and FIG. 6, in some embodiments of the present disclosure, the housing 2 further includes two second side plates 22 opposite to each other, the two first side plates 21 and the two second side plates 22 are connected end-to-end in sequence, and an area of an outer surface of each of the first side plates 21 is smaller than an area of an outer surface of each of the second side plates 22. At least one of the second side plates 22 includes a second thickened portion 221, a transition portion 222, and a second body portion 223 distributed in the first direction X. A thickness of the second thickened portion 221 is greater than a thickness of the second body portion 223, and an inner peripheral surface of the transition portion 222 extends from the second body portion 223 to the second thickened portion 221 to form a third stepped surface 224.

In the embodiments of the present disclosure, because the thickness of the second thickened portion 221 is greater than the thickness of the second body portion 223, the structural strength of the housing 2 is increased by thickening other sides of the housing 2. Moreover, because the inner peripheral surface of the transition portion 222 extends from the second body portion 223 to the second thickened portion 221 to form the third stepped surface 224, the housing 2 can be conveniently demolded, thereby facilitating the processing.

In a specific application, the first side plates 21 are narrow sides (side surfaces) of the housing 2, and the second side plates 22 are large surfaces (wide surfaces) of the housing 2. The surfaces are partially thickened to enhance the structural strength of the housing 2, thereby reducing the risk of cracking near the welding region between the housing 2 and the top cover 1. The two first side plates 21 are arranged opposite to each other, the two second side plates 22 are arranged opposite to each other, and one end of each of the two first side plates 21 and the two second side plates 22 away from the top cover 1 is fixedly connected to the bottom plate 23, to define the accommodating cavity 20.

It can be understood that in practical processing, the second side plate 22 is integrally formed, and the second thickened portion 221, the transition portion 222, or the second body portion 223 is formed by stamping or cutting.

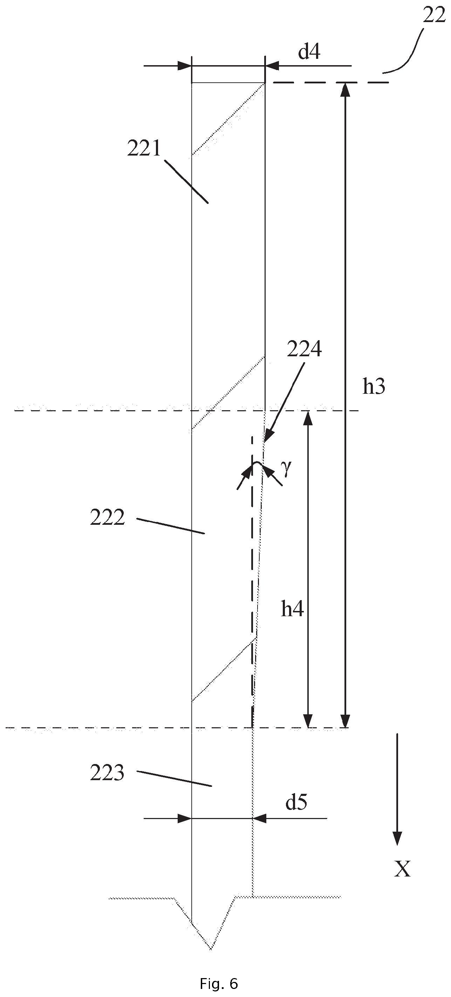

It should be noted that as shown in FIG. 6, because the inner peripheral surface of the transition portion 222 extends from the second body portion 223 to the second thickened portion 221 to form the third stepped surface 224, the housing 2 can be conveniently demolded, thereby facilitating the processing. Moreover, the arrangement of the third stepped surface 224 can avoid a sudden change in thickness between the second body portion 223 and the second thickened portion 221, which may otherwise cause stress concentration during processing, cause fatigue cracks after long-term use, and so on.

As shown in FIG. 6, in some embodiments of the present disclosure, a third angle γ is defined between the third stepped surface 224 and a side surface of the second body portion 223 facing the accommodating cavity 20, where 0°<γ≤30°.

In the embodiments of the present disclosure, setting the third angle γ between the third stepped surface 224 and the side surface of the second body portion 223 facing the accommodating cavity 20 within an appropriate range can avoid interference with the mounting of the electrode assembly 3 and prevent deformation of the second side plate 22 during processing.

In practical applications, the side surface of the second body portion 223 facing the accommodating cavity 20 is a plane, so the first body portion 213 and the second body portion 223 can define a regular space for mounting the electrode assembly 3, thereby facilitating the design and assembly.

It should be noted that provided that the thicknesses of the second body portion 223 and the second thickened portion 221 are constant, when the third angle γ between the third stepped surface 224 and the side surface of the second body portion 223 facing the accommodating cavity 20 is too small, the transition portion 222 will extend excessively and occupy too much space in the accommodating cavity 20, affecting the mounting of the electrode assembly 3 and interfering with the electrode assembly 3. When the third angle γ between the third stepped surface 224 and the side surface of the second body portion 223 facing the accommodating cavity 20 is greater than 30°, the second side plate 22 will deform during processing due to the ductility of its material.

In a specific application, the third angle γ between the third stepped surface 224 and the side surface of the second body portion 223 facing the accommodating cavity 20 may be set to 0.1°, 0.6°, 1°, 5°, 10°, 15°, 20°, 22°, 24°, 26°, 28°, 30°, etc. or fall within a range defined by any two of the above values.

Optionally, a third angle γ is defined between the third stepped surface 224 and a side surface of the second body portion 223 facing the accommodating cavity 20, where 0°<γ≤10°.

In a specific application, the third angle γ between the third stepped surface 224 and the side surface of the second body portion 223 facing the accommodating cavity 20 may be set to 0.1°, 0.6°, 1°, 1.5°, 2°, 2.5°, 3°, 3.5°, 4°, 5°, 6°, 7°, 8°, 9°, 10°, etc. or fall within a range defined by any two of the above values.

As shown in FIG. 6, in some embodiments of the present disclosure, a maximum thickness d4 of the second thickened portion 221 satisfies: 0.4 mm≤d4≤0.9 mm.

In the embodiments of the present disclosure, setting the maximum thickness d4 of the second thickened portion 221 within an appropriate range ensures a sufficient welding region between the housing 2 and the top cover 1 to ensure the welding strength, and avoid interference with the electrode assembly 3 during mounting to affect the energy density of the battery cell.

It should be noted that when d4<0.4 mm, the welding region between the housing 2 and the top cover 1 is too small, failing to ensure the welding strength; and when d4>0.9 mm, the second side plate 22 interferes with the electrode assembly 3 during mounting to affect the energy density of the battery cell.

In a specific application, the maximum thickness d4 of the second thickened portion 221 may be set to 0.4 mm, 0.45 mm, 0.5 mm, 0.55 mm, 0.6 mm, 0.65 mm, 0.7 mm, 0.75 mm, 0.8 mm, 0.85 mm, 0.9 mm, etc. or fall within a range defined by any two of the above values.

Optionally, a maximum thickness d4 of the second thickened portion 221 satisfies: 0.5 mm≤d4≤0.8 mm.

In a specific application, the maximum thickness d4 of the second thickened portion 221 may be set to 0.5 mm, 0.55 mm, 0.6 mm, 0.65 mm, 0.7 mm, 0.75 mm, 0.8 mm, etc. or fall within a range defined by any two of the above values.

As shown in FIG. 6, in some embodiments of the present disclosure, a thickness d5 of the second body portion 223 satisfies: 0.3 mm≤d5≤0.7 mm.

In the embodiments of the present disclosure, setting the thickness d5 of the second body portion 223 within an appropriate range can ensure the structural strength of the housing 2, avoid occupying too much space in the accommodating cavity 20 to affect the energy density of the battery cell, and avoid interference with the electrode assembly 3.

It should be noted that when d5<0.3 mm, the thickness of the second body portion 223 of the housing 2 is too small, failing to ensure the overall structural strength of the housing 2. When d5>0.7 mm, the second body portion 223 occupies too much space in the accommodating cavity 20, affecting the energy density of the battery cell, and interfering with the electrode assembly 3.

In a specific application, the thickness d5 of the second body portion 223 may be set to 0.3 mm, 0.35 mm, 0.4 mm, 0.45 mm, 0.5 mm, 0.55 mm, 0.6 mm, 0.65 mm, 0.7 mm, etc. or fall within a range defined by any two of the above values.

Optionally, a thickness d5 of the second body portion 223 satisfies: 0.4 mm≤d5≤0.7 mm.

In a specific application, the thickness d5 of the second body portion 223 may be set to 0.4 mm, 0.45 mm, 0.5 mm, 0.55 mm, 0.6 mm, 0.65 mm, 0.7 mm, etc. or fall within a range defined by any two of the above values.

As shown in FIG. 6, in some embodiments of the present disclosure, a total height h3 of the second thickened portion 221 and the transition portion 222 in the first direction X satisfies: 3 mm≤h3≤18 mm.

In the embodiments of the present disclosure, setting the total height h3 of the second thickened portion 221 and the transition portion 222 in the first direction X within an appropriate range can ensure the range of the thickened part of the housing 2 to significantly enhance the structural strength of the housing 2, and avoid occupying too much space in the accommodating cavity 20 and interference with the electrode assembly 3.

It should be noted that when h3<3 mm, the range of the thickened part of the housing 2 is too small, and the structural strength of the housing 2 is not significantly enhanced, failing to meet the requirement. When h3>18 mm, the second thickened portion 221 and the transition portion 222 occupy too space in the accommodating cavity 20, and interfere with the electrode assembly 3.

In a specific application, the total height h3 of the second thickened portion 221 and the transition portion 222 in the first direction X may be set to 1.4 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, etc. or fall within a range defined by any two of the above values.

Optionally, a total height h3 of the second thickened portion 221 and the transition portion 222 in the first direction X satisfies: 1.4 mm≤h3≤3 mm.

In a specific application, the total height h3 of the second thickened portion 221 and the transition portion 222 in the first direction X may be set to 1.4 mm, 1.5 mm, 2 mm, 2.2 mm, 2.4 mm, 2.6 mm, 2.8 mm, 2.9 mm, 3 mm, etc. or fall within a range defined by any two of the above values.

As shown in FIG. 6, in some embodiments of the present disclosure, a height h4 of the transition portion 222 in the first direction X satisfies: 2 mm≤h4≤15 mm.

It should be noted that the height h4 of the transition portion 222 refers to a dimension of the transition portion 222 in the first direction X.

In the embodiments of the present disclosure, setting the height h4 of the transition portion 222 within an appropriate range can ensure that the transition portion 222 will not interfere with the electrode assembly 3 during mounting to affect the energy density of the battery cell, and prevent stress concentration on the second side plate 22 which may cause fatigue cracks after long-term use.

It should be noted that when h4<2 mm, stress concentration is formed on the second side plate 22, leading to fatigue cracks after long-term use. When h4>15 mm, the transition portion 222 interferes with the electrode assembly 3 during mounting to affect the energy density of the battery cell.

In a specific application, the height h4 of the transition portion 222 in the first direction X may be set to 2 mm, 3 mm, 4 mm, 5 mm, 6 mm, 7 mm, 8 mm, 9 mm, 10 mm, 11 mm, 12 mm, 13 mm, 14 mm, 15 mm, etc. or fall within a range defined by any two of the above values.

Optionally, a height h4 of the transition portion 222 in the first direction X satisfies: 3 mm≤h4≤6 mm.

In a specific application, the height h4 of the transition portion 222 in the first direction X may be set to 3 mm, 3.5 mm, 4 mm, 4.5 mm, 5 mm, 5.5 mm, 6 mm, etc. or fall within a range defined by any two of the above values.

In some embodiments of the present disclosure, the present disclosure further provides a battery pack including the battery cell of any one of the above embodiments.

In the embodiments of the present disclosure, the first thickened portion 212 protrudes toward the interior of the accommodating cavity 20, and the thickness of the first thickened portion 212 is greater than the thickness of the opening portion 211 and the thickness of the first body portion 213. Thus, the housing 2 is partially thickened to enhance the structural strength of the housing 2 while ensuring the energy density of the battery cell. The outer surface of the first side plate 21 of the housing 2 is a flat surface, to facilitate subsequent assembly. The inner peripheral surface of the first transition segment 2121 extends from the opening portion 211 to the thickened segment 2122 to form the first stepped surface 214. The top cover 1 is located on the side of the first stepped surface 214 away from the electrode assembly 3. The first stepped surface 214 is configured to limit the top cover 1, to improve the stability of connection of the housing 2 and the top cover 1. The inner peripheral surface of the second transition segment 2123 extends obliquely from the first body portion 213 to the thickened segment 2122 to form the second stepped surface 215, which can reduce the occupation of space in the housing 2, improve the energy density of the battery cell, and facilitate processing.

In specific applications, the battery pack may be a prismatic battery or batteries of other shapes. The prismatic battery includes a rectangular hard-case battery, a blade-shaped battery, and a polygonal prismatic battery. The polygonal prismatic battery is, for example, a hexagonal prismatic battery, etc.

In the description of the specification, the description with reference to the terms "an embodiment," "some embodiments," "exemplary embodiment," "example," "specific example," or "some examples" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials, or characteristics may be combined in any suitable manner in one or more embodiments.

Although the embodiments of the present disclosure have been illustrated and described above, it is to be understood by those having ordinary skills in the art that various changes, alterations, replacements and modifications can be made to these embodiments without departing from the principle and gist of the present disclosure. The scope of the present disclosure is defined by the appended claims and their equivalents.

## Claims

1. A battery cell, comprising: a top cover (1), a housing (2), and an electrode assembly (3), wherein the housing (2) is provided with an accommodating cavity (20), the electrode assembly (3) is arranged in the accommodating cavity (20), the accommodating cavity (20) comprises an opening (201) and a cavity bottom (202) opposite to the opening (201), and the top cover (1) is configured to cover and seal the opening (201);
the battery cell has a first direction (X), the housing (2) comprises two first side plates (21) opposite to each other, extending directions of the first side plates (21) are parallel to the first direction (X), at least one of the first side plates (21) comprises an opening portion (211), a first thickened portion (212), and a first body portion (213) arranged in sequence in the first direction (X), the first thickened portion (212) protrudes toward an interior of the accommodating cavity (20), and a thickness of the first thickened portion (212) is greater than a thickness of the opening portion (211) and is greater than a thickness of the first body portion (213);
the first thickened portion (212) comprises a first transition segment (2121), a thickened segment (2122), and a second transition segment (2123) distributed in sequence in the first direction (X); and an inner peripheral surface of the first transition segment (2121) extends from the opening portion (211) to the thickened segment (2122) to form a first stepped surface (214), an inner peripheral surface of the second transition segment (2123) extends obliquely from the first body portion (213) to the thickened segment (2122) to form a second stepped surface (215), and the first stepped surface (214) is configured to limit the top cover (1).

2. The battery cell of claim 1, wherein a first angle α is defined between the first stepped surface (214) and a side surface of the opening portion (211) facing the accommodating cavity (20), a second angle β is defined between the second stepped surface (215) and a side surface of the first body portion (213) facing the accommodating cavity (20), the thickness of the opening portion (211) is defined as d1, a maximum thickness of the first thickened portion (212) is defined as d2, and the thickness of the first body portion (213) is defined as d3, wherein 1 mm≤(d2-d1)/tanα+(d2-d3)/tanβ≤24 mm; or $3 mm \leq \left(d2-d1\right) / tanα + \left(d2-d3\right) / tanβ \leq 6 mm .$

3. The battery cell of claim 1, wherein a first angle α is defined between the first stepped surface (214) and a side surface of the opening portion (211) facing the accommodating cavity (20), wherein 10°≤α≤40°; and/or
a second angle β is defined between the second stepped surface (215) and a side surface of the first body portion (213) facing the accommodating cavity (20), wherein 0.5°<β≤10°.

4. The battery cell of claim 1, wherein the thickness of the opening portion (211) is defined as d1, a maximum thickness of the first thickened portion (212) is defined as d2, the thickness of the first body portion (213) is defined as d3, and one or more of the following conditions are satisfied: $0.1 mm \leq d 2 - d 1 \leq 0.2 mm ;$ (a) $0.15 mm \leq d 2 - d 1 \leq 0.2 mm ;$ (b) $0.1 mm \leq d 2 - d 3 \leq 0.2 mm ;$ (c) and $0.15 mm \leq d 2 - d 3 \leq 0.2 mm .$ (d)

5. The battery cell of claim 3, wherein a maximum thickness d2 of the first thickened portion (212) satisfies: 0.6 mm<d2<1.0 mm; and/or
the thickness d1 of the opening portion (211) satisfies: 0.4 mm<d1≤0.8 mm; and/or
the thickness d3 of the first body portion (213) satisfies: 0.5 mm<d3≤0.8 mm.

6. The battery cell of claim 2, wherein the thickness d1 of the opening portion (211) and the thickness d3 of the first body portion (213) satisfy: d1≤d3.

7. The battery cell of claim 1, wherein in a direction from the opening portion (211) to the first body portion (213), the thickened segment (2122) has a uniform thickness, a thickness of the first transition segment (2121) gradually increases, and a thickness of the second transition segment (2123) gradually decreases.

8. The battery cell according to claim 1, further comprising an insulating layer (4), wherein the insulating layer (4) is arranged on a side of the top cover (1) facing the cavity bottom (202), a total height of the top cover (1) and the insulating layer (4) is defined as h5, a height of the opening portion (211) is defined as h1, a height of the first thickened portion (212) is defined as h2, and a height of the top cover (1) is defined as h6, wherein h6<h1+h2≤h5+15 mm.

9. The battery cell of claim 1, wherein a height of the opening portion (211) is defined as h1 and a height of the top cover (1) is defined as h6, wherein 0 mm≤h6-h1≤0.6 mm.

10. The battery cell of claim 9, wherein the height h1 of the opening portion (211) satisfies: 0.9 mm≤h1≤2.1 mm; and/or
the height h6 of the top cover (1) satisfies: 1.5 mm≤h6≤2.5 mm.

11. The battery cell of claim 1, wherein a height h2 of the first thickened portion (212) satisfies: 1.2 mm≤h2≤25 mm; or
a height h2 of the first thickened portion (212) satisfies: 3.6 mm≤h2≤6.9 mm.

12. The battery cell of claim 1, wherein the housing (2) further comprises two second side plates (22) opposite to each other, the two first side plates (21) and the two second side plates (22) are connected end-to-end in sequence, and an area of an outer surface of each of the first side plates (21) is smaller than an area of an outer surface of each of the second side plates (22);
at least one of the second side plates (22) comprises a second thickened portion (221), a transition portion (222), and a second body portion (223) distributed in the first direction (X); and
a thickness of the second thickened portion (221) is greater than a thickness of the second body portion (223), and an inner peripheral surface of the transition portion (222) extends from the second body portion (223) to the second thickened portion (221) to form a third stepped surface (224).

13. The battery cell of claim 12, wherein a third angle γ is defined between the third stepped surface (224) and a side surface of the second body portion (223) facing the accommodating cavity (20), wherein 0°<γ≤30°; and/or
a maximum thickness d4 of the second thickened portion (221) satisfies: 0.4 mm≤d4≤0.9 mm; and/or
a thickness d5 of the second body portion (223) satisfies: 0.3 mm≤d5≤0.7 mm; and/or
a total height h3 of the second thickened portion (221) and the transition portion (222) satisfies: 1.4 mm≤h3≤18 mm; and/or
a height h4 of the transition portion (222) satisfies: 2 mm≤h4≤15 mm.

14. The battery cell of claim 12, wherein a third angle γ is defined between the third stepped surface (224) and a side surface of the second body portion (223) facing the accommodating cavity (20), wherein 0°<γ≤10°; and/or
a maximum thickness d4 of the second thickened portion (221) satisfies: 0.5 mm≤d4≤0.8 mm; and/or
a thickness d5 of the second body portion (223) satisfies: 0.4 mm≤d5≤0.7 mm; and/or
a total height h3 of the second thickened portion (221) and the transition portion (222) satisfies: 1.4 mm≤h3≤3 mm; and/or
a height h4 of the transition portion (222) satisfies: 3 mm≤h4≤6 mm.

15. A battery pack, comprising the battery cell of any one of claims 1 to 14.
